(19)

Europäisches
Patentamt
European
Patent Office
Office européen
des brevets

(11)  **EP 2 884 453 A1**

(12)  **EUROPEAN PATENT APPLICATION**

(43) Date of publication:
**17.06.2015  Bulletin 2015/25**

(21) Application number: **13382507.5**

(22) Date of filing: **12.12.2013**

(51) Int Cl.:
***G06Q 50/00*** *(2012.01)*      ***G06Q 10/04*** *(2012.01)*
***H04L 29/08*** *(2006.01)*      ***G06F 17/50*** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Telefonica Digital España, S.L.U.
28013 Madrid (ES)**

(72) Inventors:
• **Logothetis, Dionysios
  28013 Madrid (ES)**
• **Siganos, Georgios
  28013 Madrid (ES)**

(74) Representative: **Carlos Hernando, Borja
Garrigues IP, S.L.P.
Hermosilla, 3
28001 Madrid (ES)**

(54)  **A computer implemented method, a system and computer program product for partitioning a graph representative of a communication network**

(57)    The computer implemented method comprises performing a partitioning of a number of vertices of a graph representing computer devices by means of running a label propagation algorithm across a plurality of datacenter locations providing a label to each vertex indicating that said vertex belongs to a given datacenter location, performing, for each of the vertices, a checking of all the other vertices connected thereto in order to find out whether they pertain to a same or to a different datacenter location, performing a decision, for each of the vertices, based on said checking, wherein said decision comprises changing said provided label or remaining with the provided label based in an objective to either having a bigger group of vertices sharing a same datacenter or keeping the partitioning balanced, and iterating said partitioning, followed by a checking, until said partitioning leads to a partition in which the number of linked vertices pertaining to a same datacenter locations is optimized.

Fig. 2

## Description

Field of the invention

The present invention generally relates to techniques for graphs partitioning. Particularly, the present invention relates to a computer implemented method, a system and computer program product for partitioning a graph representative of a communication network.

Background of the invention

Graphs are flexible structures to represent entities and their relationships. From communication networks such a social network, bioinformatics, transportation networks, the Internet, to the Web, graphs can be analyzed to extract insightful information about the underlying dynamics. These graphs are constantly increasing in size, and their timely processing can no longer be performed on a single machine.

A number of large-scale graph processing systems have been developed during the recent years, from graph databases to large-scale batch processing systems. With these systems, scientists and practitioners compute hundreds of mining applications on graphs with billions of vertices every hour. To manage this scale, graph processing systems run computations in parallel by distributing the graph across a number of machines. These systems offer an abstraction where a user-defined function is executed in parallel on each vertex in a sequence of iterations. Following the topology of the graph, the computation on each vertex depends on the computation on its neighbors. The dependencies between the vertices translate into communication and coordination between the machines where the vertices reside. These operations are usually implemented through message passing or locking, depending on the organization of the system and the memory model. In a distributed system, they can be expensive operations that introduce latency.

Because of these dependencies, the way the graph is partitioned across the machines has a great impact on the runtime performance and the scalability of the system. Maintaining locality between vertices within the same partition minimizes the overhead of network operations between different machines to coordinate the dependencies between neighboring vertices. Moreover, balanced partitions offer uniform load balancing during the graph computation and hence increase performance.

METIS [1] has been the partitioning golden standard against new approaches. It is known to produce partitioning's with very good locality and balance. However, it is not suitable for very large graphs.

Balanced LPA [2] is another technique similar to the present invention that is also based on the technique of label propagation that attempts to provide partitioning's with locality and balance. Like the present invention this algorithm also executes iterations where every iteration tries to improve the locality by moving graph vertices across partitions. Unlike the present invention, which is completely decentralized, in order to produce balanced partitions, said balanced LPA methodology must execute a centralized linear solver between any two iterations, which limits its scalability.

The methodology presented in Stanton et al. [4] is another technique designed specifically to scale to large graphs. However, it does not support adaptation to dynamic graphs or to adaptation to changes in the underlying compute resources (e.g. changes in the number of machines the graph has to be partitioned across).

Mizan [6] is a system that looks at the problem of dynamically adapting the graph partitioning in graph processing systems. Mizan does this by performing runtime monitoring of the performance of the graph processing system, for instance, to find hotspots in specific machines, and migrates vertices to other workers to balance the load. Unlike the present invention Mizan ignores the graph topology.

SPAR [5] and Sedge [3] are also concerned with the problem of distributing a graph to different machines and adapting the distribution. However, they focus on minimize latency for simple graph queries, and address the problem through careful replication of the vertices across machines. Instead our approach is suitable for more complex graph analytics.

However, finding such partitioning is known to be a hard computational problem. Even though tools like METIS [1] can compute a partitioning with good locality and balance, they do not scale to very large graphs as they require a global view of the graph. Instead, our algorithm is executed in a completely decentralized way. Every parallel process does not need knowledge of the entire graph.

Furthermore, graphs such as a social network can be dynamic. In dynamic graphs, edges and vertices are added (e.g. new friendships between the users of a social network) and removed over time. Under these conditions, the partitioning of the graph needs to be constantly updated to overcome the degrading performance due to an outdated placement of the vertices. However, existing solutions do not explicitly support dynamic graphs. As a result they must re-partition the graph from scratch, which is an expensive task especially when performed frequently and with limited computational resources.

Additionally, modern large-scale graph processing systems are often deployed on cloud environments. In these compute environments, the computational resources are also highly dynamic. For instance, machines are added and removed throughout the life of the system, and they are shared by different applications that make their performance and availability change across time. This implies that the partitioning of the graph should adapt also to the evolution of the processing system, in practice supporting the addition and the removal of partitions. Existing approaches do not explicitly support adaptation to a different number of partitions and must, similarly, re-partition the graph from scratch.

Summary of the Invention

Therefore, the present invention provides a generic method and system for partitioning graphs that produces partitioning's with good locality and good balance at the same time, eventually improving the performance of application that manage the underlying graph. Present invention is lightweight and can partition massive-scale graphs.

To that end, according to a first aspect the present invention provides a computer implemented method for partitioning a graph representative of a communication network, wherein said graph includes a number of vertices representing computing devices and edges representing links between said computing devices, wherein said vertices are distributed across different datacenter locations, said method comprising performing a partitioning of said vertices, by means of running a label propagation algorithm across said plurality of datacenter locations providing a label to each vertex indicating that said vertex belongs to a given datacenter location.

On contrary of the known proposals, the computer implemented method further performs, for each of the vertices, a) a checking of all the other vertices connected thereto in order to find out whether they pertain to a same or to a different datacenter location and b) a decision based on said checking, wherein said decision comprises changing said provided label or remaining with the provided label based in an objective to increase the group of vertices sharing a same datacenter or keeping the partitioning balanced. Moreover in a step c) an iteration of said steps a) and b) is also done until said partitioning leads to a partition in which the number of linked vertices pertaining to the same datacenter locations is optimized, that is locality and balance is enhanced, so that the application performance is improved.

According to a preferred embodiment, said step c) halts upon being the number of linked vertices pertaining to different locations minimized i.e., a stable state or a score of the graph is reached, without changing between iterations. The score is computed based on the possible migrations of each vertex. In general, a higher score means that by moving the vertex to a partition there will be better locality and better balance. Preferably, the scoring function is chosen specifically to maximize locality and balance.

The decision for changing or remaining with the label, which is based on said computed score, is performed by a locality and balance module individually for each specific vertex. That is, based on a vertex and its attached or connected vertices, without other more distant vertices from the graph.

The computer implemented method performs additional iterations, in case the number of vertices of the graph changes, to adapt the graph to the new number of vertices. Moreover, the method also performs additional iterations in case the number of datacenter locations associated to the graph changes. Those changes are a consequence of an addition or a subtraction of the computing devices or of the datacenter locations included in the communication network.

The step of iterating said partitioning includes a first partitioning that is preferably performed randomly.

According to a second aspect, there is provided a system for partitioning a graph representative of a communication network, comprising: a number of computing devices each of them represented by a vertex in said graph, said number of computing being linked together by edges; a plurality of different datacenters related to said number of computing devices, said plurality of different datacenters belonging to different locations; and a partitioning module partitioning said number of computing devices across said plurality of different datacenters providing a label to each computing device indicating that said computing device belongs to a given datacenter, said partitioning module being based on a label propagation algorithm.

On contrary of the known proposals, the system of the second aspect further comprises: a score function module that checks for each of the computer devices, all the other computer devices connected thereto to find out whether they pertain to a same or to a different datacenter also providing a computer score of each vertex that depends on the possibilities of changing the vertex label; and a locality and balance optimization module that decides, for each of the computer devices, based on said checking, to change said provided label or to remain with the provided label, wherein said partitioning module performs one or more iterations.

A migration module is responsible for executing the change of the provided label in case a computing device having decided to do so.

The system can also include means for adapting the graph to a new number of computing devices based on an increasing or a decreasing of the initial number of said computing devices and/or to a new number of datacenters based on an increasing or a decreasing of the initial number of said plurality of datacenters.

The system of the second aspect is adapted to implement the method of the first aspect.

The subject matter described herein can be implemented in software in combination with hardware and/or firmware, or a suitable combination of them. For example, the subject matter described herein can be implemented in software executed by a processor.

According to a third aspect there is provided a computer program product comprising a tangible non-transitory computer readable recordable storage medium including computer usable program code for partitioning a graph representative of a communication network according to steps a) and b) of the method of claim 1.

The computer usable program code may be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

Present invention produces partitioning's with very good locality and balance, eventually improving application performance for the systems that manage the underlying graph, such as a graph database or a graph analytics system.

Moreover, the present invention solution is a lightweight, fully decentralized approach that allows it to scale to very large graphs. This makes it practical for modern graph management systems that must manage, for instance, a large social network.

Unlike other approaches, present invention explicitly supports dynamic graphs. In most real-world scenarios and production environments graphs are naturally dynamic. The invention avoids the cost of repartitioning the graph from scratch when it changes. This saves processing time and as a consequence the computation resources and the associated monetary cost required to maintain a graph well partitioned.

The proposed method explicitly supports dynamic compute environments. Modern cloud computing environment are dynamic, shared, and elastic. This means that the available resources may change by either growing or shrinking. In both cases, the graph partitioning must be adapted. The invention, similarly, avoid the costs of repartitioning from scratch. Instead, it efficiently adapts to the new resources.

Brief Description of the Drawings

The previous and other advantages and features will be more fully understood from the following detailed description of embodiments, with reference to the attached, which must be considered in an illustrative and non-limiting manner, in which:

Fig. 1 Illustrates an example of a conversion of a directed graph (left) to an undirected graph (right).
Fig. 2 is a flow diagram describing the processes executed by the present invention for partitioning a graph representative of a communication network according to some embodiments.
Fig. 3 illustrates the different modules and how they work together to implement the present invention.
Fig. 4 illustrates the proposed method for partitioning a graph representative of a communication network according to a particular embodiment.

Description of Several Embodiments

Present invention extends the label propagation algorithm (LPA) in a number of ways. LPA is a well-understood algorithm that fits well to a message-passing paradigm. LPA depends on decisions taken by the vertices based solely on local information, such as in the present invention requirements.

A graph is defined as $G = \langle V,E \rangle$, where $V$ is the set of vertices in the graph and $E$ is the set of edges such that an edge $e \in E$ is the pair $(u, v)$ of vertices it connects, for $u, v \in V$. LPA is designed to work on undirected graphs, hence $(u,v) = (v,u)$. We denote by $N(v) = \{u: u \in V,(u,v) \in E\}$ the neighborhood of $v$, and by $deg(v) = |N(v)|$ the degree of v. As we aim at a k-way partitioning of the graph, we define $L$ a set of $k$ labels such that $L = \{l_1,...,l_k\}$. A is the labeling function $\alpha : V \to L$ such that $\alpha(v) = l_j$ if label $l_j$ is assigned to vertex v.

In the present invention, said graph is representative of a communication network in which the set of vertices in the graph represent computing devices and the edges represent links between said computing devices.

K-way Label Propagation

The main idea behind LPA is as follows. Initially, each vertex in the graph is assigned a label $l_i$ at random, with $0 < l \le k$. Subsequently, an iterative process is performed where each vertex propagates its label to its neighbors through the edges. Each vertex acquires the label that is more frequent among its neighbors. The *score* of a vertex *v* for a particular label *l* is the number of neighbors assigned to label *l*. Formally:

$$score(v,l) = \sum_{u \in N(v)} \delta(\alpha(u),l) \qquad (1)$$

where $\delta$ is the Kronecker delta. The vertex updates its label $l_V$ to maximize its score, according to the update function:

$$l_v = \arg\max_l score(v, l) \qquad (2)$$

When multiple labels satisfy the update function, LPA breaks ties randomly, but prefers to keep the current label if it is among them. It has been shown that removing this latter preference provides better solutions, but it may slow convergence. The algorithm halts when no vertex is assigned a new label.

Directed Label Propagation

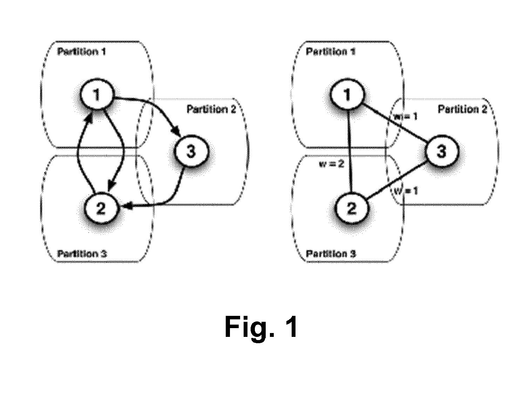

The data model of Pregel is a directed graph. To partition directed graphs with LPA, the graph needs first to be converted to the undirected form. Said approach would create an undirected edge where at least one directed edge exists between vertex u and vertex $u$ in the directed graph. This approach makes the algorithm agnostic of the conversion. However, for the invention purposes a better solution is possible. Considering the scenario of Fig. 1, in the undirected graph the number of cut edges is three. Now, imagine we want to move one vertex to another partition to remove a cut edge - it has to be ignored for now the solution where all the vertices migrate to same partition producing zero cut edges. According to the current formulation, as LPA is agnostic of the original graph, any migration of a vertex to another partition is as likely, and it would produce one cut edge less. However, if we consider the number of cut edges produced in the original graph, the cost is not the same. In fact, either moving vertex 2 to partition 1 or vertex 1 to partition 3 would in practice produce less cut edges in the directed graph. This latter decision, once the graph is loaded into the system and messages are sent through the directed edges, produces less communication over the network.

To consider the number of directed edges connecting $u$, $v$ in the original directed graph D, present invention introduces a weighting function $w(u,v)$ such that:

$$w(u,w) = \begin{array}{ll} 1, & \text{if } (u,v) \oplus (v,u) \in D \\ 2, & \text{if } (u,v) \oplus (v,u) \in D \end{array} \qquad (3)$$

where $\oplus$ is the logical XOR. Present invention extends now the formulation in (1) to include the weighting function:

$$score'(v, l) = \sum_{u \in N(v)} w(u, v) \delta(a(u), l) \qquad (4)$$

In practice, the new the update function effectively counts the number of messages exchanged locally in the system, and takes a decision to maximize them.

Balanced Label Propagation

Until now it has been considered the balancing of the partitions. The hard of obtaining perfectly balanced partitions has been relaxed, aiming instead at *encouraging* a similar number of edges across the different partitions. A challenge to the present invention goal comes from the requirement of a decentralized approach. In this sense, a different path from the work in [2] is taken where a centralized component is added to LPA to ensure the matching of balancing constraints, with possible drawbacks of scalability.

Present invention considers here the case of a *homogeneous* system, where each machine has equal resources. This setup is of- ten advised in synchronous graph processing systems like Pregel, to minimize the time spent by faster machines idling at the synchronization barrier, waiting for the slower ones. The capacity $C$ of each partition is defined as:

$$C = c \cdot \frac{|E|}{k} \qquad (5)$$

Parameter c > 1 ensures additional capacity to each partition is available for migrations. The load of a partition is defined as the number of edges in that partition:

$$B(l) = \hat{\mathbf{A}}_{v2G} \; deg(v) d(a(v), l) \qquad (6)$$

*A penalty function* is introduced to discourage assigning vertices to nearly full partitions. Given a partition indicated by label *l*, the penalty function π(*l*) is defined as follows:

$$p(l) = \frac{B(l)}{C} \qquad (7)$$

As the penalty function produces values in the interval [0, 1], Ec. (4) has to be normalized to do the same. Hence to include the penalty function the score function is reformulated as follows:

$$score^{(l)}(v, l) = \hat{\mathbf{A}}_{u2N(v)} \; \frac{w(u,v) d(a(u), l)}{w(u,v)} - l\, p(l) \qquad (8)$$

Parameter λ weights the impact of balancing on the score function. To break ties present invention preferably chooses the less loaded partition.

Convergence and Halting

Convergence and halting of LPA are not well understood. LPA is formally equivalent to minimizing the Hamiltonian for a ferromagnetic Potts model. The global optimum solution for any graph would assign the same label to each vertex. However, as vertices take decisions based on local information, LPA converges to local optima. This characteristic is at the basis of the ability of LPA to detect communities. Unfortunately, even in asynchronous systems, LPA does not prevent cycles where the partitioning fluctuates between the same states, preventing the algorithm to converge. In such cases, the halting condition described before will not work. A number of strategies have been proposed to guarantee the halting of LPA in synchronous systems. These strategies are either based on different heuristics applied to tie breaking and halting criteria or on the order with which vertices are evaluated.

However, due to the contribution of the penalty function these cannot be applied to the present invention.

A different strategy is used by the present invention instead. At a given iteration, the *score* of the partitioning for graph G is defined based on the current score of each vertex. Formally:

$$score(G) = \sum_{v \in G} score''(v, \alpha(l_v)) \qquad (9)$$

In practice, this is the score that the algorithm tries to optimize by taking local decisions. A partitioning is considered to be in a *stable state*, when the score of the graph does not change between iterations *l,i*+1 more than a given $\varepsilon$ between two iterations. The algorithm halts when a stable state is reached.

Incremental Label Propagation

Graphs generally are dynamic. Edges and vertices are added and removed over time. As the graph changes, the computed partitioning becomes outdated, possibly degrading the global score. Present invention updates the partitioning to the new graph topology without repartitioning from scratch. As the graph changes affect local areas of the graph, present invention wants to update the latest stable partitioning only in the portions that are affected by the graph changes.

Due to its iterative nature, LPA lends itself to incremental computation. Intuitively, the effect of the graph changes is that the current stable state is "pushed" away from the local optimum it converged to. As a result, the algorithm is restarted with the effect of letting the algorithm look for new local optima. The vertices evaluate their new local score, possibly deciding to migrate to another partition. The algorithm continues as describe previously. As far as new vertices are concerned, present invention preferably assigns them to the least loaded partition.

The number of iterations required to converge to a new stable state depends on the number of graph changes and the last state. Clearly, not every graph change will have the same effect. Sometimes, no iteration may be necessary at all. In fact, certain changes may not affect any vertex to the point that the score of a different label is higher than the current one. As no migration is caused, the state remains stable. On the other hand, other changes may cause more migrations due to the disruption of certain weak local equilibriums. In this sense, the algorithm behaves as a gradient descending optimization algorithm.

Elastic Label Propagation

Because the partitions are tied to machines or datacenters, capacity C should be bound to a maximum capacity Cmax that depends on the resources available to the machines. As the graph grows, the capacity C of the partitions will eventually reach the maximum capacity Cmax. In this case, a number of machines can be added, and the graph can be spread across these new machines as well. Moreover, the number of machines can be increased to increase parallelization. On the other hand, as the graph shrinks or the number of available machines decreases, a number of partitions can be removed. In this case, a number of vertices should migrate from these partitions to the remaining ones.

In both cases, the algorithm adapts to the new number of partitions without repartitioning the graph from scratch. Moreover, the algorithm takes decisions based on a decentralized and lightweight heuristics. Each vertex decides independently whether it should migrate. To do so, a probabilistic approach is used. When $n$ new partitions are added to the system, each vertex will migrate with a probability $p$ such that:

$$p = \frac{n}{k+n} \qquad (10)$$

In the trivial case where $n$ partitions are removed, all the vertices assigned to those partitions migrate. In both cases, the vertices choose uniformly at random the partition to migrate to. After the vertices have migrated, the algorithm is restarted to adapt the partitioning to the new assignments. As in the case of incremental LPA, the number of iterations required to converge to a new stable state depends on a number of factors, such as the graph size, the number of partitions added or removed, etc.

This simple strategy clearly disrupts the current partitioning degrading the global score. However, it has a number of interesting characteristics. First, it matches the invention requirements of a decentralized and lightweight heuristic. The heuristic does not need a global view of the partitioning or a complex computation to decide which vertices to migrate. Second, by choosing randomly, the partitions remain fairly balanced. Third, it injects a factor of randomization into the optimization problem that may allow the solution to jump out of a local optima.

Given a large n, the cost of adapting the partitioning to the new number of partitions may be quite large, due to the random migrations. However, in a real system, the frequency with which partitions are added or removed is low, compared for example to the number of times a partitioning is updated due to graph changes. Although vertices are shuffled around, the locality of the vertices that are not moved is not completely destroyed, such as if the partitioning was performed from scratch. In fact, the adaptation of the partitioning to the new number of partitions will naturally take advantage of this intermediate state.

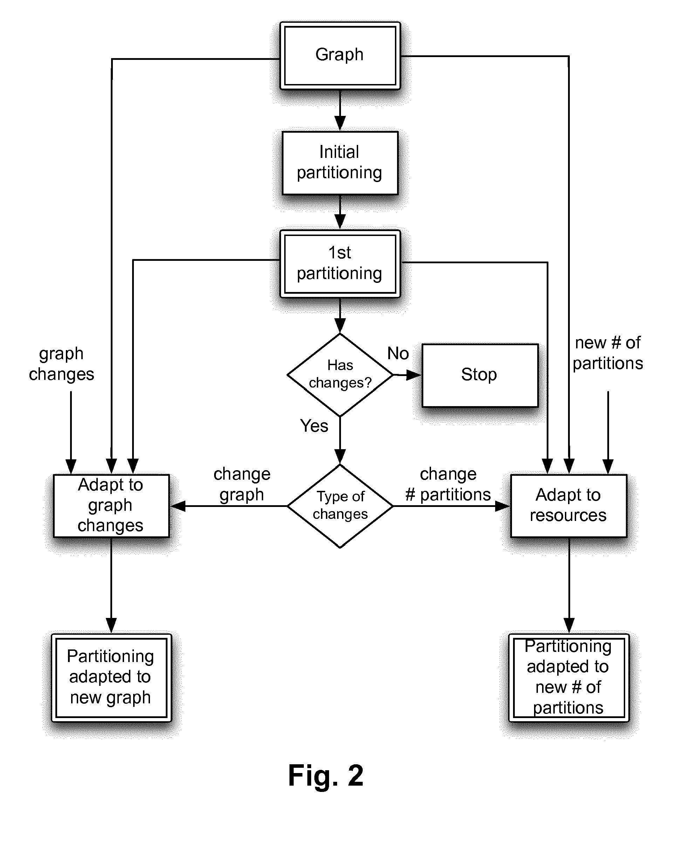

In reference to Fig. 2 it is described the steps involved in using the present invention according to some embodiments. As a first step the input graph is fed to the "initial partitioning" process that executes the algorithm to produce the very first partitioning of the original, un-partitioned graph. At this point, the output partitioning satisfies the requirement of that it has been set: a specific number of partitions, with good locality and balance.

If, subsequently, there are no changes in the graph or the underlying resources, the execution of the algorithm stops. However, there can by two types of changes. One type is when the input graph changes, for instances there are new connections between existing nodes/vertices in the graph. As a result of this, the partitioning may not be optimal any more, that is, the locality or the balance may have changes, and therefore the partitioning has to be adapted.

In the event of graph changes, the process continues by using (i) the original input graph, (ii) the graph changes (e.g. the new connections) and (iii) initial computed partitioning's, to compute the new partitioning. It is important here, that this process is not done from scratch. Instead, this step adapts the initial partitioning based on the new graph changes to a new optimal partitioning by restoring the good locality and balance.

The second type of change is when the underlying compute resources change. For instance, it increased the number of machines that can be used, so we may want to partition the graph across all of them. This translates to a change in the number of partitions. Similarly with graph changes, present invention do not want to re-partition the graph from scratch, rather wants to take advantage of the partitioning already computed. Therefore, in this case the next step is to use (i) the original input graph, (ii) the new number of partitions and (iii) the initial computed partitioning, to compute the new partitioning.

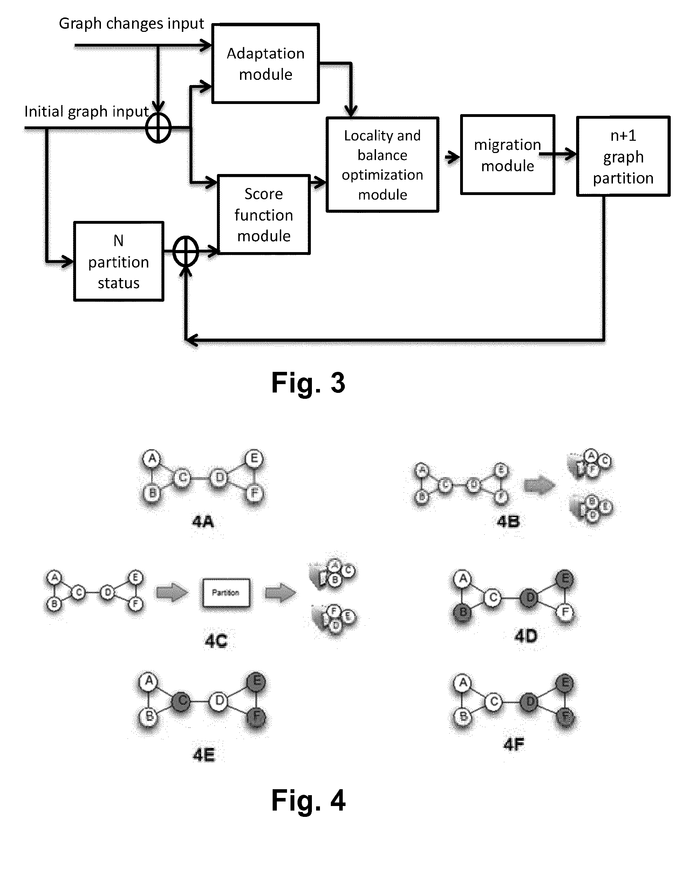

In Fig. 3 it is illustrated the different modules and how they work together to implement present invention approach. Each module is described separately but also details on how they work together are given.

In general, the approach starts with an initial partitioning of the graph and then iteratively updates this partitioning. This update happens based on a score function and optimization logic. To perform said operations, a partitioning module is responsible for taking the initial graph and producing an initial partitioning. This can be, for instance, a totally random partitioning, and is used solely to bootstrap the whole process.

A scoring function module is responsible for assigning a score to the possible migrations of a vertex. The algorithm works by iteratively migrating vertices from one partition to the other in order to improve the final objective, which is locality and balance so present invention assigns a score to each such destination partition. In general, a higher score means that by moving the vertex to that partition there will be better locality and better balance. The scoring function, which was described before, is preferably chosen to maximize locality and balance.

The locality and balance optimization module is responsible for using the scoring function as well as additional decisions, such as changes in the graph, to decide which vertices should move and where. For instance, in the simplest case for every vertex it selects the destination with the highest score or may break ties between destinations with the same score. This module is also responsible for taking into consideration any changes that have happened to the graph and when deciding how to do the migrations.

Once the locality and balance optimization module has decided which vertices have to migrate, the migration module is responsible for performing the actual moves, that is, changing the label of a vertex to reflect the new partition. The migration module also, it can do it at the same time of said changing, notifies the neighbors of a vertex about this change. This notification is necessary so that neighbors can make a new decision in the next iteration based on the correct current state of the partitioning.

After the migration has finished, the partitioning for the current iteration have been computed. The scoring and migrations happen in iterations. Accordingly, the output of this process is fed back to the beginning of the same process. The scores are now calculated based on the new labels and the optimization and migration happens in the same manner.

The whole process will stop when the locality and balance of the partitioning have not improved significantly since the previous iteration. It has to be noted that the initial graph may change, in which case the partitioning must be adapted. As Fig. 3 shows, these changes are first combined with the initial graph to produce the current state of the graph. The scoring function will now be applied to the current state of the graph. Furthermore, the graph changes are also fed to the adaptation module. This module is responsible for applying the adaptation logic. This logic is used by the optimization module to decide which vertices to move when changes happen in the graph. For instance, the adaptation module may limit vertex migration only to those vertices that have changed (e.g. those that have new connections).

In reference to Fig. 4 it is illustrated a particular example where the proposed method could be implemented. According to this particular example the communication network representative of the graph to be partitioned is a social network (without being limitative) and the vertices in the graph are represented by users termed A to F. Because of very large communication networks store user profiles in a distributed manner, different user profiles are distributed across different machines in large data centers. In this particular example, it is assumed only two machines as seen in Fig. 4B.

When a user requests to see the profile of a linked user or friend (e.g. user A must see the profile of user B), this information might exist on the same machine or on a different machine, which increases the time to find this information. Therefore, the efficient operation and interactive user experience in a communication network depend on partitioning user profiles in an intelligent manner. This means partitioning the data according to the users' connections, so that for most profiles the profiles of their friends are on the same machine.

This is why typically, before distributing the graph, the step of partitioning proceeds (Fig. 4C), the goal of which is to find a good mapping of the users to machines. The step of calculating the partitioning is expensive/ tough. For that reason, present invention has been made to be easily parallelizable and scalable to very large graphs.

According to said particular example, the graph will be partitioned across only two machines, as above. However, the invention could partition a graph to any number of machines. The algorithm starts by assigning every graph vertex to a partition randomly. White and grey colors are used to indicate which of the two partitions a vertex belongs to (Fig 4D).

In this initial partitioning, it can be seen that there are five pairs of friends that belong to different partitions, and hence they would exist on different machines. The goal is to come up with a labeling of the vertices such as for most pairs of friends, both friends have the same label, that is, the will be assigned to the same machine. The algorithm works by having each vertex decide individually, whether it should change its label (i.e. move to a new partition) or not. The fact that each vertex makes this decision independently is important because it allows this computation to happen in a distributed manner. More specifically, the algorithm works in iterations. In every iteration, every vertex makes the decision to change its label or not. For instance, the decision can be based on two objectives: (i) whether changing the label will bring more friends together and (ii) whether the partitions remain balanced. If changing does not make any difference, the vertex remains where it is.

Starting from the initial partitioning of Fig. 4D, in the next iteration the following happen: A sees that it has one white friend and one grey friend, so it stays white; B sees that it has two white friends, so it will also turn white; C sees that it has two grey friends, so it will turn grey; D sees that it has two white friends, so it will turn white; E sees that it has one grey and one white friend, so it will stay gray and F sees that it has two grey friends, so it will turn grey. The results are showed in Fig. 4 E.

After this iteration, there are still five pairs of friends with different labels, so the algorithm continues in the same fashion. A sees that it has one white friend and one grey friend, so it stays white; B sees that it has one white friend and one grey friend, so it stays white; C sees that it has three white friends, so it will turn white; D sees that it has three grey friends, so it will turn grey; E sees that it has one grey and one white friend, so it will stay gray; F sees that it has one grey and one white friend, so it will stay gray. After this, the computed partitioning is as showed in Fig. 4F. In this new partitioning, now there is only one pair of friends that has different labels, that is, vertices C and D.

If the algorithm continues its execution, in the next iteration it will be seen that there will be no change in the partitioning, and this is when the method stops. More generally, the method stops when there is not a big improvement in the locality of the partitioning, that is, the number of pairs that have the same color.

This final labeling can be used by the communication network to decide how to place user profiles on across the two machines. Notice that with this partitioning, if user A requests the profile of user B, it will be located on the same machine, resulting in faster and improved communication.

The principle of this invention can be easily extended to other networks such as bioinformatics for example in order to manage big clusters of information on a research distributed in different datacenter locations that use to interchange data among them from incoming new results. Also in the field of transportation networks events collected in a plurality of different datacenters can be grouped to better analyze conflictive situations.

The scope of the present invention is defined in the following set of claims.

## Claims

1. A computer implemented method for partitioning a graph representative of a communication network, wherein said graph includes a number of vertices representing computing devices and edges representing links between said computing devices, wherein said vertices are distributed across different datacenter locations, said method comprising performing a partitioning of said vertices, by means of running a label propagation algorithm across said plurality of datacenter locations providing a label to each vertex indicating that said vertex belongs to a given datacenter location, wherein the method further comprises:

   a) performing, for each of the vertices, a checking of all the other vertices connected thereto in order to find out whether they pertain to a same or to a different datacenter location;
   b) performing a decision, for each of the vertices, based on said checking, wherein said decision comprises changing said provided label or remaining with the provided label; and
   c) iterating said steps a) and b) until said partitioning leads to a partition in which the number of linked vertices pertaining to a same datacenter location is optimized.

2. The method of claim 1, comprising performing said step c) until the number of linked vertices pertaining to different datacenter locations is minimized.

3. The method of claim 1, wherein said decision is performed by a locality and balance module for each vertex individually.

4. The method of claim 1, wherein the vertices a given vertex is connected thereto are notified, by a migration module, in case said given vertex changing the provided label.

5. The method of claim 1, wherein in case the number of vertices of the graph changes the method comprises performing additional iterations in order to adapt the graph to the new number of vertices.

6. The method of claim 5, wherein said changes are a consequence of an addition or a subtraction of the computing devices.

7. The method of claim 1, wherein in case the number of datacenter locations associated to the graph changes, the method comprises performing additional iterations in order to adapt the graph to the new number of datacenter locations.

8. The method of claim 7, wherein said changes are a consequence of an addition or a subtraction of said datacenter locations included in the communication network.

9. The method of claim 1, wherein said step c) of iterating said partitioning includes a first partitioning performed randomly.

10. The method of claim 2, wherein said step c) of iterating said partitioning includes a first partitioning performed randomly.

11. A system for partitioning a graph representative of a communication network, comprising:

- a number of computing devices each of them represented by a vertex in said graph, said number of computing devices being linked together by edges;
- a plurality of different datacenters related to said number of computing devices, said plurality of different datacenters belonging to different locations; and
- a partitioning module partitioning said number of computing devices across said plurality of different datacenters providing a label to each computing device indicating that said computing device belongs to a given datacenter, said partitioning module implementing a label propagation algorithm,

wherein said system further comprises:

a score function module that checks for each of the computer devices, all the other computer devices connected thereto to find out whether they pertain to a same or to a different datacenter also providing a computer score of each vertex that depends on the possibilities of changing the vertex label; and
a locality and balance optimization module that decides, for each of the computer devices, based on said checking, to change said provided label or to remain with the provided label,

wherein said partitioning module provides one or more iterations.

12. The system of claim 11, wherein said change of the provided label is executed by a migration module.

13. The system of claim 11, wherein an adaptation module for adapting the graph to a new number of computing devices based on an increasing or decreasing of the initial number of said computing devices and/or to a new number of datacenters based on an increasing or decreasing of the initial number of said plurality of datacenters.

14. A computer program product comprising a tangible non-transitory computer readable recordable storage medium including computer usable program code for partitioning a graph representative of a communication network according to the steps a) and b) of the method of claim 1.

# Fig. 1

```
                          ┌──────────────┐
                          │    Graph     │
                          └──────────────┘
                                 │
                                 ▼
                          ┌──────────────┐
                          │   Initial    │
                          │ partitioning │
                          └──────────────┘
                                 │
                                 ▼
                          ┌──────────────┐
                          │     1st      │
                          │ partitioning │
                          └──────────────┘
                                 │
                                 ▼
                              ◇ Has        No      ┌──────────┐
                            changes? ──────────────▶│   Stop   │
                              ◇                     └──────────┘
                                 │ Yes
                                 ▼
  ┌──────────┐   change      ◇ Type of     change      ┌───────────┐
  │ Adapt to │◀── graph ──── changes  ── # partitions ─▶│ Adapt to  │
  │  graph   │                 ◇                        │ resources │
  │ changes  │                                          └───────────┘
  └──────────┘                                                │
       │                                                      ▼
       ▼                                              ┌─────────────┐
┌─────────────┐                                       │ Partitioning│
│Partitioning │                                       │ adapted to  │
│ adapted to  │                                       │   new # of  │
│  new graph  │                                       │  partitions │
└─────────────┘                                       └─────────────┘
```

graph changes

new # of partitions

# Fig. 2

Graph changes input

Adaptation
module

Initial graph input

Locality and
balance
optimization
module

migration
module

n+1
graph
partition

Score
function
module

N
partition
status

# Fig. 3

4A

4B

4C

4D

4E

4F

# Fig. 4

Europäisches
Patentamt

European
Patent Office

Office européen
des brevets

# EUROPEAN SEARCH REPORT

Application Number

EP 13 38 2507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FORTUNATO ET AL: "Community detection in graphs", PHYSICS REPORTS, NORTH-HOLLAND, AMSTERDAM, NL, vol. 486, no. 3-5, 1 February 2010 (2010-02-01), pages 75-174, XP026856953, ISSN: 0370-1573 [retrieved on 2009-12-04] * pages 76-78,86 * * pages 90,91 * * pages 124,127 * ----- | 1-14 | INV. G06Q50/00 G06Q10/04 H04L29/08 G06F17/50 |
| X | WO 2011/032077 A2 (UNIV MARYLAND [US]; BROECHELER MATTHIAS [US]; SUBRAHMANIAN VENKATRAMAN) 17 March 2011 (2011-03-17) * paragraphs [0003] - [0006], [0007], [0032] - [0035], [0038], [0048] - [0049], [0079], [0082] * * paragraphs [0112] - [0113] * ----- | 1-14 | |

TECHNICAL FIELDS SEARCHED (IPC)

G06Q
H04L
G06F

The present search report has been drawn up for all claims

| Place of search | Date of completion of the search | Examiner |
|---|---|---|
| The Hague | 13 May 2014 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 38 2507

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2014

| Patent document cited in search report | Publication date | Patent family member(s) | Publication date |
|---|---|---|---|
| WO 2011032077 A2 | 17-03-2011 | US 2012317142 A1<br>WO 2011032077 A2 | 13-12-2012<br>17-03-2011 |

EPO FORM P0459

For more details about this annex : see Official Journal of the European Patent Office, No. 12/82